# EUROPÄISCHE PATENTSCHRIFT

(11) **EP 1 843 168 B1**
(45) Veröffentlichungstag und Bekanntmachung des Hinweises auf die Patenterteilung: **05.11.2008**
(21) Anmeldenummer: 07105201.3
(22) Anmeldetag: 29.03.2007
(51) Int. Cl.: G01S 1/00

(54) **Mobile Referenzstation zur Erzeugung von Korrektursignalen für eine differentielle Positionsbestimmungseinrichtung**
Mobile reference station for producing differential corrections
Station de référence mobile pour fournir des corrections différentielles

(30) Priorität: 07.04.2006 DE 102006016396
(43) Veröffentlichungstag der Anmeldung: 10.10.2007
(73) Patentinhaber: Deere & Company, Moline, IL 61265-8098 (US)
(72) Erfinder: Fiedelak, Jens, 66540 Wiebelskirchen (DE); Rutz, Arnold, 66482 Zweibrücken (DE)
(74) Vertreter: Holst, Sönke

(56) Entgegenhaltungen:
- DE-A1- 19 639 302
- US-A- 6 140 959
- US-A1- 2005 012 660
- US-B1- 6 380 888

## Beschreibung

Die Erfindung betrifft eine mobile Referenzstation zur Erzeugung von Korrektursignalen für eine differentielle Positionsbestimmungseinrichtung, umfassend:
einen Positionsbestimmungssignalempfänger zum Empfang von Signalen von Satelliten eines Positionsbestimmungssystems,
einen elektronischen Prozessor, der über eine Sendeeinheit mit einer Radioantenne verbunden und eingerichtet ist, Positionssignale vom Positionsbestimmungssignalempfänger zu erhalten und daraus Korrekturdaten abzuleiten, die durch die Sendeeinheit auf Radiofrequenzen aufmodulierbar und über die Radioantenne abstrahlbar sind.

### Stand der Technik

In der Landwirtschaft werden satellitengestützte Positionserfassungssysteme unter anderem zum selbsttätigen Lenken landwirtschaftlicher Fahrzeuge, zum positionsspezifischen Erfassen von Daten, z. B. Ertragsdaten, und zum positionsspezifischen Ansteuern von Aktoren verwendet, beispielsweise zum Ausbringen von Düngemitteln oder Chemikalien.

Die satellitengestützten Positionserfassungssysteme wie GPS, Glonass oder das zukünftige Galileo verwenden mehrere in einer Erdumlaufbahn befindliche, mit Atomuhren ausgestattete Satelliten, die jeweils Zeit- und Identitäts- bzw. OrtsInformationen enthaltende elektromagnetische (Radio-) Wellen abstrahlen. Die zugehörigen Empfänger müssen jeweils die Signale von zumindest drei Satelliten empfangen, um ihre aktuelle Position im Raum bestimmen zu können. Soll zusätzlich auch die aktuelle Zeit bestimmt werden, ist ein Empfang von Signalen von vier Satelliten erforderlich.

Es ist weiterhin üblich (s. EP 0 660 660 B), die Genauigkeit der Positionserfassungssysteme durch den Empfang von Korrekturdaten enthaltenden Radiosignalen zu verbessern, die von Referenzstationen an bekannten Standorten ausgestrahlt werden. Man bezeichnet diese Systeme als differentielle Positionserfassungssysteme (z. B. DGPS). Die Referenzstationen empfangen Signale von Satelliten des Positionserfassungssystems und leiten daraus eine Positionsinformation ab, die sie in Korrekturdaten umwandeln und mittels eines Radiosenders zum Fahrzeug übertragen, das mit einem geeigneten Empfänger zum Empfang der Korrekturdaten ausgestattet ist. Anhand der Korrekturdaten und der von den Satelliten empfangenen Signale wird durch einen Rechner die Postition des Fahrzeugs bestimmt. Es sind einerseits so genannte Wide Area Systeme mit stationären und vernetzten Referenzstationen und andererseits lokale Referenzstationen bekannt, die mobil sein können und in der Regel in der Nähe des jeweils zu bearbeitenden Feldes aufgestellt oder an erhöhten Standorten dauerhaft montiert werden. Ein Vorteil einer Positionsbestimmung mit einer lokalen Referenzstation gegenüber einem Wide Area System liegt in einer wesentlich höheren Genauigkeit, die erzielt wird, weil Netzwerklaufzeiten entfallen und das Korrektursignal in direkter Umgebung des Einsatzortes generiert wird. Solche Systeme werden aufgrund ihrer hohen Genauigkeit zur dynamischen Vermessung oder zur Lenkung von fahrenden Maschinen verwendet und werden daher auch als RTK (Real Time Kinematic)-Systeme bezeichnet.

Die US 6 140 959 A beschreibt eine selbstkalibrierende GPS-Referenzstation, die anhand der empfangenen Positionssignale erkennt, ob sie sich noch an ihrer Position befindet oder umgestellt wurde. Beträgt die Positionsänderung weniger als 100 m, wird davon ausgegangen, dass die Referenzstation nicht umgestellt wurde. Anderenfalls werden über einen längeren Zeitraum Positionssignale empfangen und erst anschließend wieder Korrektursignale abgestrahlt.

Bei mobilen Referenzstationen besteht ein gewisses Risiko, dass diese während des Betriebes bewegt werden, weil sie beispielsweise einen Fahrweg o. ä. versperren und deshalb durch einen Dritten weggestellt werden. Eine auf einem Stativ aufgestellte Referenzstation kann auch bei stärkerem Wind umgeweht werden. Jedwede Bewegung der Referenzstation führt zu einer analogen Bewegung eines selbsttätig gelenkten Fahrzeugs auf dem Feld und stellt somit ein erhebliches Sicherheitsrisiko dar.

Die Referenzstation kann nämlich selbst nicht unterscheiden, ob die Positionsveränderung durch eine Bewegung der Station selbst verursacht ist oder durch andere Fehler vorgegaukelt wird. Sie überträgt vielmehr weiterhin die Korrekturdaten, welche aber nunmehr auf einer neuen Position der Referenzstation basieren, an das Fahrzeug. Da dem Rechner des Fahrzeugs nun andere Korrekturdaten vorlieben, errechnet er auch eine andere Positionsinformation. Da diese von der Sollposition abweichen wird, erzeugt ein Lenksystem des Fahrzeugs entsprechend entgegen arbeitende Lenkdaten, die zu der erwähnten ungewünschten Lenkbewegung führen, um das Fahrzeug auf den Sollweg zurück zu führen. Erst wenn eine Positionsveränderung Werte annimmt, die systemimmanente Fehler unwahrscheinlich erscheinen lässt, sendet die Referenzstation eine Warnmeldung an das Fahrzeug und schaltet das Korrektursignal ab. Bis zu diesem Zeitpunkt kann das Fahrzeug aber bereits mehrere Meter vom Sollkurs abgewichen sein.

### Aufgabe der Erfindung

Das der Erfindung zu Grunde liegende Problem wird darin gesehen, eine mit einer mobilen Referenzstation zusammenwirkende Einrichtung zur Bestimmung der Position eines landwirtschaftlichen Fahrzeuges bereitzustellen, bei dem die genannten Probleme nicht mehr oder in einem geringeren Maße vorliegen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine mobile Referenzstation, die sich insbesondere zum Zusammenwirken mit einer differentiellen Positionsbestimmungseinrichtung zur Bestimmung der Position eines landwirtschaftlichen Fahrzeuges eignet, umfasst einen Positionsbestimmungssignalempfänger zum Empfang von Signalen von Satelliten eines Positionsbestimmungssystems und einen elektronischen Prozessor, der über eine Sendeeinheit mit einer Radioantenne verbunden ist und im Betrieb Positionssignale vom Positionsbestimmungssignalempfänger erhält und daraus Korrekturdaten ableitet, die durch die Sendeeinheit auf Radiofrequenzen aufmoduliert und über die Radioantenne abgestrahlt werden. Es wird vorgeschlagen, den Prozessor mit einem Trägheitssensor zu verbinden und ihn anhand von Signalen des Trägheitssensors eine von einer Positionsveränderung der Referenzstation abhängige Größe berechnen zu lassen und ein Fehlersignal zu erzeugen, wenn diese Größe einen vorbestimmten Schwellenwert überschreitet. Bei dieser Größe kann es sich um die Positionsveränderung, um ihre Geschwindigkeit oder um die Beschleunigung der Referenzstation handeln. Übersteigt der Betrag dieser Größe einen vorbestimmten Schwellenwert, der beispielsweise im einstelligen cm oder cm/s oder cm/s² - Bereich liegen kann, wird ein Fehlersignal erzeugt so dass ein Fehlersignal erzeugt wird wenn die Referenzstation umgestürzt ist oder weggestellt wurde, weil sie einen Fahrweg versperrt oder weil sie einen Dritten in Weg steht.

Das Fehlersignal kann verwendet werden, um die Abstrahlung der Korrekturdaten durch die Referenzstation abzubrechen. Das Lenksystem eines Fahrzeugs, das mit einer differentiellen Positionsbestimmungseinrichtung ausgerüstet ist, die mit der Referenzstation zusammenwirkt, kann dann gegebenenfalls auf ein anderes Korrektursignal zurückgreifen oder ohne Korrekturdaten weiterarbeiten. Auf diese Weise werden unerwünschte Lenkausschläge des Fahrzeugs vermieden.

Außerdem kann das Fehlersignal über die Sendeeinheit und die Radioantenne abgestrahlt werden. Ein Bediener eines Fahrzeugs, das mit einer differentiellen Positionsbestimmungseinrichtung ausgerüstet ist, die mit der Referenzstation zusammenwirkt, kann auf diesem Weg praktisch sofort über einen möglichen Fehler der Referenzstation informiert werden und seinerseits weitere Maßnahmen treffen, insbesondere das Fahrzeug manuell lenken oder es anhalten und die Referenzstation wieder an ihre ursprüngliche Sollposition zurückbringen.

Der Trägheitssensor ist vorzugsweise physisch mit dem Positionsbestimmungssignalempfänger verbunden, beispielsweise in einem gemeinsamen Gehäuse angeordnet. Bei einer möglichen Ausführungsform sind der Positionsbestimmungssignalempfänger und der Trägheitssensor sowie ggf. der Prozessor und die Sendeeinheit auf einer gemeinsamen Platine angebracht. Der Trägheitssensor kann Bestandteil eines Trägheitsnavigationssystems für eine Maschine sein, das zum Ausgleich eines Versatzes zwischen dem Positionsbestimmungssignalempfänger und den Rädern oder anderen Referenzpunkten der Maschine (oder als Navigationshilfe bei Ausfall des Positionsbestimmungssignalempfängers) dient.

Der Trägheitssensor kann Bestandteil eines Trägheitsnavigationssystems sein, wie es an Bord von Fahrzeugen verwendet wird. Von einer Positionsveränderung der Referenzstation kann beispielsweise ausgegangen werden, wenn das Trägheitsnavigationssystem Werte für eine Positionsveränderung oder Positionsveränderungsgeschwindigkeit oder Beschleunigung ermittelt, die über einer Drift liegen, wie sie für derartige Systeme üblich ist.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer mobilen Referenzstation und eines damit zusammenwirkenden landwirtschaftlichen Fahrzeugs,
- Fig. 2: ein Flussdiagramm, nach dem der Prozessor der Referenzstation arbeitet, und
- Fig. 3: ein Flussdiagramm, nach dem der Rechner des Fahrzeugs arbeitet.

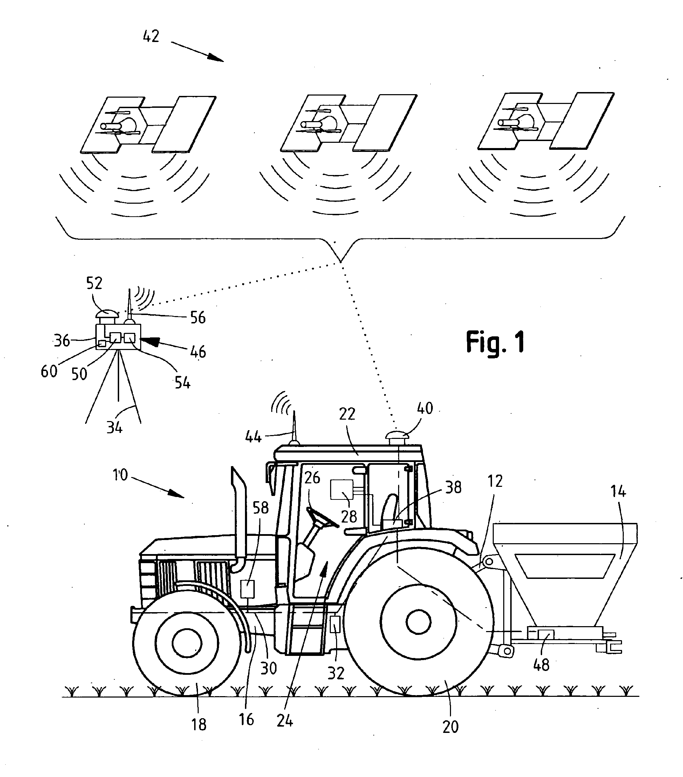

Die Figur 1 zeigt eine seitliche Ansicht eines landwirtschaftlichen Fahrzeugs 10 in Form eines Traktors und eines an einem Dreipunktgestänge 12 der Maschine 10 angebauten Arbeitsgeräts 14 in Form eines Schleuderdüngerstreuers. Das Fahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz, Pedale (nicht gezeigt) und ein virtuelles Terminal 28. Das virtuelle Terminal 28 ist mit einer Datenübertragungseinrichtung 30 verbunden, die in der dargestellten Ausführungsform ein serieller Datenbus ist.

Die Datenübertragungseinrichtung 30 ist weiterhin mit einem Rechner 38 verbunden, der direkt oder über die Datenübertragungseinrichtung 30 mit einem Positionsbestimmungssignalempfänger 40 zum Empfang von Signalen von Satelliten 42 eines Positionsbestimmungssystems (z. B. GPS, Glonass oder Galileo) und einem Korrekturdatenempfänger 44 verbunden ist, der zum Empfang von auf Radiowellen aufmodulierten Korrekturdaten dient, die von einer mobilen Referenzstation 46 abgestrahlt werden. Weiterhin ist der Rechner 38 mit einem Trägheitsnavigationssystem 32 verbunden.

Die mobile Referenzstation 46 umfasst ein dreibeiniges Stativ 34, auf dem ein Gehäuse 36 befestigt ist, das einen elektronischen Prozessor 50 enthält, der mit einem Positionsbestimmungssignalempfänger 52, einem Trägheitssensor 60 und über eine Sendeeinheit 54 mit einer Radioantenne 56 verbunden ist. Der Trägheitssensor 60 ist in dieser Ausführungsform als an sich bekanntes Trägheitsnavigationssystem ausgeführt, wie es in Fahrzeugen verwendet wird (s. EP 1 475 609 A, deren Offenbarung durch Verweis mit in die vorliegenden Unterlagen aufgenommen wird). Er ist innerhalb des Gehäuses 36 der Referenzstation 46 angeordnet.

Die mobile Referenzstation wird im Betrieb am Rand eines Felds oder an einer anderen, geeigneten Stelle aufgestellt.

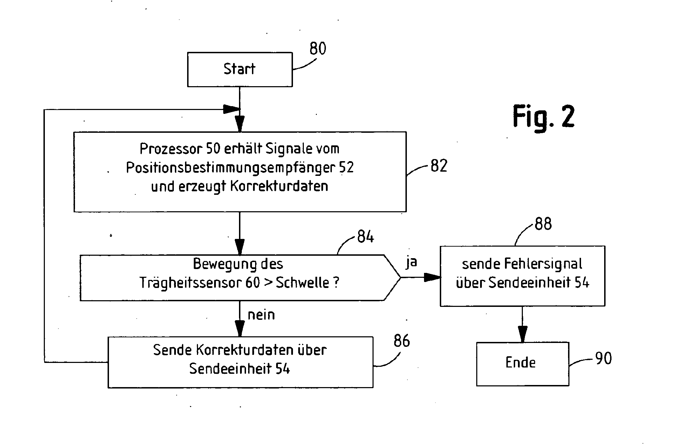

Der Betrieb der Referenzstation 46 wird im Folgenden anhand des in der Figur 2 dargestellten Flussdiagramms beschrieben. Nach dem Start im Schritt 80 (d. h. Einschalten und Hochfahren der Referenzstation 46) beaufschlagt der Positionsbestimmungssignalempfänger 52 im Schritt 82 den Prozessor 50 mit Positionssignalen, die er aus Signalen ableitet, die er von den Satelliten 42 empfängt. Der Prozessor 50 erzeugt anhand der empfangenen Positionssignale und seiner bekannten Position Korrekturdaten, die als Differenz zwischen wahrer und gemessener Position berechnet und als Korrekturvektor angegeben werden können. Hierzu wird auf die Offenbarung der DE 195 39 302 A verwiesen, die durch Verweis mit in die vorliegenden Unterlagen aufgenommen wird. Anschließend fragt der Prozessor im Schritt 84, ob die Signale des Trägheitssensors 60 darauf hinweisen, dass der Trägheitssensor 60 und mit ihm die Referenzstation 46 eine Bewegung gegenüber dem Erdboden vollführt haben (oder eine Bewegungsgeschwindigkeit oder Beschleunigung aufweisen), die größer als ein Schwellenwert ist, der beispielsweise dem 3fachen der für ein Trägheitsnavigationssystem üblichen Drift entspricht. Ist das nicht der Fall, folgt der Schritt 86, in dem die Korrekturdaten durch die Sendeeinheit 54 auf Radiofrequenzen aufmoduliert und über die Radioantenne 56 abgestrahlt werden. Anderenfalls folgt der Schritt 88, in dem ein Fehlersignal über die Sendeeinheit 54 abgestrahlt wird. Auf den Schritt 86 folgt wieder der Schritt 82; auf den Schritt 88 wird die Prozedur im Schritt 90 beendet.

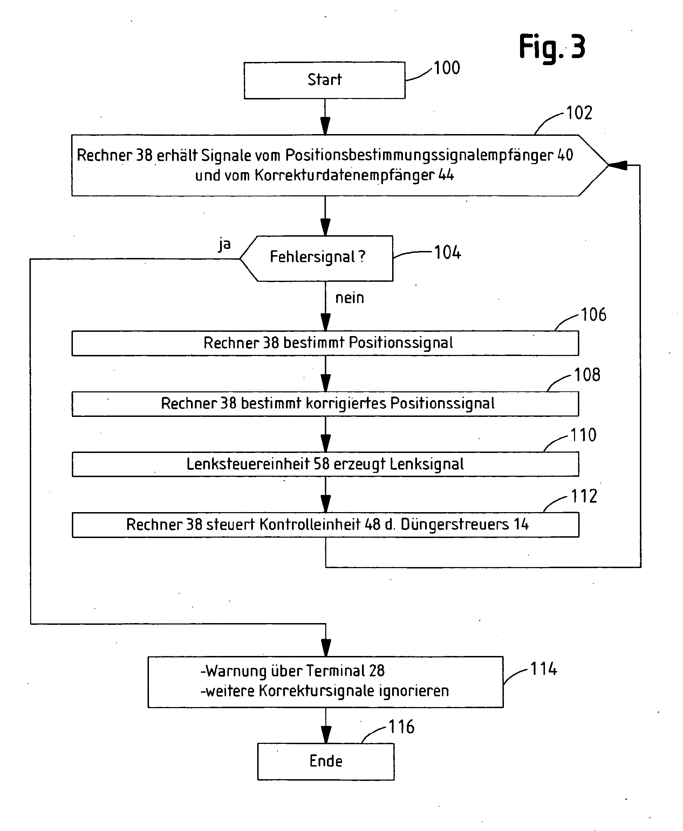

Die Figur 3 stellt ein Flussdiagramm dar, nach dem der Rechner 38 des Fahrzeugs 10 arbeitet. Nach dem Start im Schritt 100 wird der Rechner 38 im Schritt 102 mit Signalen vom Positionsbestimmungssignalempfänger 40 und über den Korrekturdatenempfänger 44 mit Signalen von der Sendeeinheit 54 beaufschlagt. Es folgt der Schritt 104, in dem der Rechner 38 untersucht, ob die Sendeeinheit 54 ein Fehlersignal abgestrahlt hat. Ist das nicht der Fall, berechnet der Rechner 38 im Schritt 106 anhand der Signale vom Positionsbestimmungssignalempfänger 40 ein Positionssignal, dessen Genauigkeit er anhand der von der Sendeeinheit 54 empfangenen Korrekturdaten der Referenzstation 46 verbessert.

Das Trägheitsnavigationssystem 32 des Fahrzeugs 10 beaufschlagt den Rechner 38 mit einer Information über eventuelle Gier- und Rollwinkel des Fahrzeugs 10. Der Rechner 38 verwendet im Schritt 108 die Signale des Trägheitsnavigationssystems 32, um den Versatz zwischen den vorderen Rädern 18 und dem Positionsbestimmungssignalempfänger 40 zu kompensieren, wenn das Fahrzeug 10 über unebenes Gelände fährt. Die Signale des Trägheitsnavigationssystems 32 können auch verwendet werden, um bei zeitweiligem Ausfall der Signale vom Positionsbestimmungssignalempfänger 40 und/oder vom Korrekturdatenempfänger 44 Lenksignale erzeugen zu können.

Das kompensierte Positionssignal wird im Schritt 110 von einer Lenksteuereinheit 58, die über die Datenübertragungseinrichtung 30 mit dem Rechner 38 verbunden ist, mit einer Sollposition entlang eines abgespeicherten Sollwegs verglichen und zur Erzeugung eines Lenksignals herangezogen, mit dem ein Lenkzylinder (nicht gezeigt) zum Lenken der Vorderräder 18 angesteuert wird.

Außerdem wird im Schritt 112 das ursprüngliche oder das kompensierte Positionssignal durch den Rechner 38 zur Ansteuerung einer Kontrolleinheit 48 zur positionsspezifischen Steuerung des Düngerstreuers 14 anhand eines Düngeplans verwendet. Im Schritt 112 könnten durch den Rechner 38 auch Daten erfasst werden, z. B. hinsichtlich des Pflanzenzustands oder bei einem Mähdrescher oder Feldhäcksler Ertragsdaten.

Wenn der Schritt 104 (basierend auf dem Schritt 84) eine Positionsveränderung der Referenzstation 46 ergibt, kann man davon ausgehen, dass die Referenzstation 46 von ihrer Sollposition entfernt wurde, beispielsweise weil sie einem Dritten im Weg stand, oder umgestürzt ist, z. B. durch Wind oder vorbeilaufende Tiere. Im Schritt 114, der im Falle eines Fehlersignals im Schritt 104 folgt, wird durch den Rechner 38 über das virtuelle Terminal 28 eine Warnmeldung an den Bediener in der Fahrerkabine 22 gegeben. Der Fahrer wird somit auf einen möglichen Fehler hingewiesen. Weiterhin ignoriert der Rechner 38 im Folgenden eingehende Korrektursignale von der Referenzstation 46. Dadurch werden übermäßige Lenkausschläge der Vorderräder 18 vermieden. Nach dem Schritt 114 wird die Prozedur im Schritt 116 zunächst beendet.

Der selbsttätige Lenkvorgang kann, nunmehr jedoch ohne Korrekturdaten von der Referenzstation 46, oder nachdem die Referenzstation 46 wieder an die vorgesehene Position verbracht und letzteres durch eine Eingabe mittels einer mit dem Prozessor 50 verbundenen Schnittstelle (nicht gezeigt) bestätigt wurde, mit Korrekturdaten fortgesetzt werden. Alternativ kann der Fahrer mittels des Lenkrads 26 den Lenkvorgang übernehmen.

## Patentansprüche

1. Mobile Referenzstation (46) zur Erzeugung von Korrektursignalen für eine differentielle Positionsbestimmungseinrichtung, umfassend:
einen Positionsbestimmungssignalempfänger (52) zum Empfang von Signalen von Satelliten (42) eines Positionsbestimmungssystems,
einen elektronischen Prozessor (50), der über eine Sendeeinheit (54) mit einer Radioantenne (56) verbunden und eingerichtet ist, Positionssignale vom Positionsbestimmungssignalempfänger (52) zu erhalten und daraus Korrekturdaten
abzuleiten, die durch die Sendeeinheit (54) auf Radiofrequenzen aufmodulierbar und über die Radioantenne (56) abstrahlbar sind,
**dadurch gekennzeichnet, dass** der Prozessor (50) mit einem Trägheitssensor (60) verbunden und betreibbar ist, anhand von Signalen des Trägheitssensors (60) eine von einer Positionsveränderung der Referenzstation (46) abhängige Größe zu berechnen und ein Fehlersignal zu erzeugen, wenn diese einen vorbestimmten Schwellenwert überschreitet, so dass ein Fehlersignal erzeugt wird, wenn die Referenzstation (46) umgestürzt ist oder durch einen Dritten weggestellt wurde, weil sie einen Fahrweg versperrt oder weil sie einen Dritten im Weg steht.

2. Referenzstation (46) nach Anspruch 1, **dadurch gekennzeichnet, dass** der Prozessor (50) betreibbar ist, auf ein Fehlersignal hin die Abstrahlung von Korrekturdaten zu beenden.

3. Referenzstation (46) nach Anspruch 1 oder 2, **dadurch gekennzeichnet, dass** der Prozessor (50) betreibbar ist, das Fehlersignal über die Sendeeinheit (54) und die Radioantenne abzustrahlen.

4. Referenzstation (46) nach einem der Ansprüche 1 bis 3, **dadurch gekennzeichnet, dass** der Trägheitssensor (60) physisch mit dem Positionsbestimmungssignalempfänger (52) verbunden ist.

5. Referenzstation (46) nach einem der Ansprüche 1 bis 4, **dadurch gekennzeichnet, dass** der Trägheitssensor (60) ein Bestandteil eines Trägheitsnavigationssystems ist.

6. Referenzstation (46) nach Anspruch 5, **dadurch gekennzeichnet, dass** der Schwellenwert größer als eine für ein Trägheitsnavigationssystem übliche Drift ist.

## Claims

1. Mobile reference station (46) for production of correction signals for a differential position-finding device, comprising:
a position-finding signal receiver (52) for reception of signals from satellites (42) in a position-finding system,
an electronic processor (50), which is connected by a transmission unit (54) to a radio antenna (56) and is designed to receive position signals from the position-finding signal receiver (52) and to derive correction data from these position signals, which correction data can be modulated by the transmission unit (54) onto radio frequencies and can be transmitted via the radio antenna (56),
**characterized in that** the processor (50) is connected to an inertial sensor (60) and can be operated to use signals from the inertial sensor (60) to calculate a variable which is dependent on any position change of the reference station (46), and to produce an error signal when this exceeds a predetermined threshold value, so that an error signal is produced, when the reference station (46) is overturned or is put aside by a third party, because it is blocking a road or because it is in the way of a third party.

2. Reference station (46) according to Claim 1, **characterized in that** the processor (50) can be operated to end the transmission of correction data in response to an error signal.

3. Reference station (46) according to Claim 1 or 2, **characterized in that** the processor (50) can be operated to transmit the error signal via the transmission unit (54) and the radio antenna.

4. Reference station (46) according to one of Claims 1 to 3, **characterized in that** the inertial sensor (60) is physically connected to the position-finding signal receiver (52).

5. Reference station (46) according to one of Claims 1 to 4, **characterized in that** the inertial sensor (60) is a component of an inertial navigation system.

6. Reference station (46) according to Claim 5, **characterized in that** the threshold value is greater than the normal drift of an inertial navigation system.

## Revendications

1. Station de référence mobile (46) pour générer des signaux de correction pour un dispositif de détermination différentielle de la position comprenant :
un récepteur de signal de détermination de la position (52) destiné à recevoir des signaux de la part de satellites (42) d'un système de détermination de la position,
un processeur électronique (50) qui est relié avec une antenne radioélectrique (56) par le biais d'une unité d'émission (54) et qui est conçu pour recevoir des signaux de position de la part du récepteur de signal de détermination de la position (52) et pour en déduire des données de correction qui peuvent être modulées à des radiofréquences par l'unité d'émission (54) et qui peuvent être émises par le biais de l'antenne radioélectrique (56),
**caractérisée en ce que** le processeur (50) est relié avec un détecteur d'inertie (60) et peut être utilisé pour calculer, au moyen des signaux du détecteur d'inertie (60), une grandeur dépendante d'un changement de position de la station de référence (46) et pour générer un signal de défaut lorsque celle-ci dépasse une valeur de seuil prédéterminée, de sorte qu'un signal de défaut soit généré lorsque la station de référence (46) est renversée ou a été déplacée par un tiers parce qu'elle bloquait une voie de circulation ou parce qu'elle se trouvait dans le chemin d'un tiers.

2. Station de référence (46) selon la revendication 1, **caractérisée en ce que** le processeur (50) peut être utilisé pour, en présence d'un signal de défaut, mettre fin à l'émission des données de correction.

3. Station de référence (46) selon la revendication 1 ou 2, **caractérisée en ce que** le processeur (50) peut être utilisé pour émettre le signal de défaut par le biais de l'unité d'émission (54) et l'antenne radioélectrique.

4. Station de référence (46) selon l'une des revendications 1 à 3, **caractérisée en ce que** le détecteur d'inertie (60) est relié physiquement avec le récepteur de signal de détermination de la position (52).

5. Station de référence (46) selon l'une des revendications 1 à 4, **caractérisée en ce que** le détecteur d'inertie (60) est un composant d'un système de navigation inertiel.

6. Station de référence (46) selon la revendication 5, **caractérisée en ce que** la valeur de seuil est supérieure à une dérive habituelle pour le système de navigation inertiel.
